# EUROPÄISCHE PATENTSCHRIFT

(11) **EP 0 775 060 B1**
(45) Veröffentlichungstag und Bekanntmachung des Hinweises auf die Patenterteilung: **30.12.1998**
(21) Anmeldenummer: 95928491.0
(22) Anmeldetag: 29.07.1995
(51) Int. Cl.: B60H 3/06, F24F 3/16

(54) **VORRICHTUNG ZUR BESEITIGUNG DER SCHAD- UND AROMASTOFFE AUS EINEM DEM FAHRZEUGINNENRAUM ZUGEFÜHRTEN LUFTSTROM**
DEVICE FOR REMOVING NOXIOUS AND AROMATIC MATTER FROM AN AIR FLOW INTO THE INTERIOR OF A VEHICLE
DISPOSITIF PERMETTANT D'ELIMINER LES SUBSTANCES NOCIVES ET ODORANTES D'UN FLUX D'AIR ACHEMINE DANS L'HABITACLE D'UN VEHICULE

(30) Priorität: 08.08.1994 DE 4427793
(43) Veröffentlichungstag der Anmeldung: 28.05.1997
(73) Patentinhaber: Behr GmbH & Co., 70469 Stuttgart (DE); DAIMLER-BENZ AKTIENGESELLSCHAFT, 70567 Stuttgart (DE)
(72) Erfinder: KHELIFA, Noureddine, D-70180 Stuttgart (DE); ABERSFELDER, Günter, D-71065 Sindelfingen (DE)
(74) Vertreter: Riedel, Peter, Dipl.-Ing.
(86) Internationale Anmeldenummer: EP9503024
(87) Internationale Veröffentlichungsnummer: WO9605079

(56) Entgegenhaltungen:
- DE-A- 3 100 915
- DE-A- 3 532 463
- DE-A- 3 545 664
- DE-A- 4 023 995
- DE-A- 4 140 942
- DE-C- 3 517 105
- GB-A- 2 248 195
- US-A- 5 085 049

## Beschreibung

Die Erfindung bezieht sich auf eine Vorrichtung zur Beseitigung der Schad- und Aromastoffe aus einem einem Fahrzeuginnenraum zugeführten Luftstrom, der im Oberbegriff des Anspruchs 1 angegebenen Gattung.

Aus der DE 35 32 463 A1 ist eine Klimaanlage für ein Kraftfahrzeug bekannt, bei der in einem Luftführungskanal ein Staubfilter und ein Geruchsfilter angeordnet sind. Derartige Geruchsfilter bestehen aus Materialien, die aufgrund ihrer Oberflächenstruktur die Aromastoffe adsorbieren. Da das Adsorptionsvermögen derartiger Filter begrenzt ist, nimmt das Adsorptionsvermögen mit fortschreitender Zeit ab und teilweise werden die eingelagerten Stoffe wieder freigesetzt und von dem Luftstrom wieder in den Fahrzeuginnenraum getragen. Nach einer vorgegebenen Betriebsdauer sind diese Filterelemente auszutauschen. Damit die Serviceintervalle nicht zu gering werden, müssen derartige Filter hinsichtlich des Volumens und/oder der Packungsdichte entsprechend groß ausgelegt werden, was hinsichtlich des benötigten Bauraums oder des auftretenden Druckverlustes nachteilig ist. Außerdem werden mit den bekannten Filtern lediglich wenige Arten von Geruchs- oder Schadstoffen erfaßt.

In der DE 35 17 105 C1 ist ein Verfahren zum kontinuierlichen Entfernen von Schadstoffen aus einem Gasstrom beschrieben. Hierzu ist eine mit einem Sorbens gefüllte Trommel vorgesehen, in welche durch eine Leitung zu reinigendes Gas eintritt und an der Zwei Leitungen angeschlossen sind, durch die das Gas austritt. In der Trommel werden keine definierten Luftströme gebildet, so daß die Beaufschlagung der einzelnen Zonen im wesentlichen von den Strömungswiderständen innerhalb des Sorbens und an den abgehenden Leitungen abhängig ist. Aufgrund der Schüttungsdichte in der Trommel entstehen hohe Druckverluste, so daß ein großer Energieaufwand zur Erzeugung des Gasstromes erforderlich ist. Darüber hinaus muß bei der bekannten Anordnung zur Desorption des Reaktormaterials der Gasstromanteil, welcher die desorbierten Schadstoffe aufgenommen hat, durch den gesamten Reaktor bis zu der entsprechenden abgehenden Leitung geführt werden.

Aus der DE 40 23 995 C2 ist eine Vorrichtung zur Frisch-Luft- und Innenluftreinigung in Kraftfahrzeugen mittels einem mit Photonen bestrahlten Fotokatalysators auf Halbleiterbasis bekannt. Für den Betrieb einer solchen Vorrichtung ist als Strahlungsquelle eine Quecksilberdampflampe erforderlich, die unter Verwendung federnder Mittel an dem im Fahrzeug fixierten Katalysatorbett gehalten ist.

Der Erfindung liegt die Aufgabe zugrunde, eine Vorrichtung zur Beseitigung der Schad- und Aromastoffe der im Oberbegriff des Anspruchs 1 angegebenen Gattung zu schaffen, durch die ein hoher Reinheitsgrad der dem Fahrzeuginnenraum zugeleiteten Luft erzielt wird und bei der ein kontinuierlicher und wartungsfreier Betrieb möglich ist.

Diese Aufgabe wird durch eine Vorrichtung mit den Merkmalen des Anspruchs 1 gelöst.

Die wesentlichen Vorteile der Erfindung sind darin zu sehen, daß von dem insgesamt vorhandenen Adsorbermaterial stets ein Teil als Adsorber bzw. Absorber im zu reinigenden Luftstrom liegt, während der andere Teil mittels eines Desorptionsluftstromes gereinigt wird. Auf diese Weise ist stets ein hohes Adsorptions- bzw. Absorptionsvermögen bei völlig wartungsfreiem Betrieb gegeben. Die Gesamtmenge des Adsorbermaterials kann gering gehalten werden, da stets regeneriertes Material zur Verfügung steht und keine mit der Betriebsdauer zunehmende Kontaminierung auftritt. Aufgrund der getrennten Luftströmungswege ergibt sich eine definierte Beaufschlagung des Reaktormaterials und die Ausbildung als flächiges Wandelement hat den Vorteil, daß der Strömungswiderstand bzw. der Druckabfall gering gehalten wird. Durch die gegensinnige Luftströmungsrichtung wird erreicht, daß der Abschnitt des Reaktors mit der größten Kontaminierung der Fortluftöffnung zugewandt ist.

Gemäß einer bevorzugten Weiterbildung des Erfindungsgegenstandes sind die Luftströmungswege durch eine gemeinsame Lufthauptkammer und zwei getrennte Luftnebenkammern gebildet, und jeder der Reaktoren ist zwischen der Lufthauptkammer und einer der Luftnebenkammern angeordnet, wobei Luftstromsteuerelemente in der Lufthauptkammer und den Luftnebenkammern vorgesehen sind, durch die wechselseitig die Reaktoren vom Adsorptionsbetrieb zum Desorptionsbetrieb und umgekehrt umsteuerbar sind. Dabei sind der im Adsorptionsbetrieb befindliche Reaktor abströmseitig mit dem Fahrzeuginnenraum und der im Desorptionsbetrieb befindliche Reaktor abströmseitig mit der Außenseite des Fahrzeugs verbunden. Eine solche Anordnung hat den Vorteil, daß die Reaktoren ruhend angeordnet sind, wobei die Luftströme mittels der Luftstromsteuerelemente nach vorgegebenen Zyklen alternierend durch die Reaktoren geleitet werden.

Alternativ dazu ist es jedoch auch möglich, daß ein Gehäuse mit einem rotierenden Reaktor vorgesehen ist, durch das die Luftströmungswege in Kammern des Gehäuses geführt sind, wobei Sektoren des Reaktors aus der Kammer des Adsorptionsluftstromes in die Kammer des Desorptionsluftstromes bewegt werden und umgekehrt. Bei der Anordnung mit einem rotierenden Reaktor können die Luftstromsteuerelemente entfallen. Dafür ist jedoch ein entsprechender Antrieb des Reaktors erforderlich. Ein solcher Reaktor wird bevorzugt schrittweise nach vorgegebenen Zeitzyklen bewegt, wobei der Schrittwinkel maximal 180° betragen kann, vorzugsweise jedoch <90° ist. Alternativ dazu kann der Reaktor kontinuierlich gedreht werden.

Die Desorptionswirkung wird bei einigen Adsorbermaterialien gesteigert, wenn Wärme zugeführt wird. Es ist daher vorteilhaft, daß zur Desorption des Adsorbens vor dem Reaktor eine Heizvorrichtung, insbesondere eine PTC-Heizung oder ein wasserdurchströmter Heizkörper, angeordnet ist. Da sich die Heizvorrichtung vor dem Reaktor befindet und den Desorptionsluftstrom aufheizt, erfolg die Desorption adiabatisch. Zur Erzeugung des erforderlichen Luftstromes ist mindestens ein Gebläse vorzusehen, wobei durch geeignete Ausgestaltung der das Gebläse verlassende Gesamtluftstrom in einen Desorptions- und einen Adsorptionsluftstrom aufgeteilt wird. Es ist jedoch ebenso möglich, für den Desorptionsluftstrom ein separates Gebläse vorzusehen. Um eine Verschmutzung des Adsorbermaterials durch Partikel zu vermeiden, können im Luftweg vor den Reaktoren Partikelfilter herkömmlicher Bauart angeordnet werden.

Als Adsorbermaterialien kommen Aktivkohle, Zeolith, Aluminiumoxid und Silicagel in Betracht. Dabei ist es möglich, daß der Reaktor aus einer Kombination oder Mischung von mindestens zwei dieser Materialien besteht. Die Kombination oder Mischung unterschiedlicher Adsorber hat den Vorteil, daß das Spektrum der adsorbierten Schad- und Aromastoffe vergrößert wird. Sofern sich bestimmte Adsorbermaterialien aufgrund ihrer Struktur nicht zur Mischung eignen, so kann die Kombination der Adsorptionsmaterialien dadurch erreicht werden, daß die verschiedenen Materialien in quer zur Luftströmungsöffnung verlaufenden Schichten angeordnet sind.

Insbesondere bei Reaktoren, die zumindest teilweise Zeolith oder Silicagel umfassen, wird neben der Schad- und Aromastoffbeseitigung dem Luftstrom Feuchtigkeit entzogen, so daß nicht nur gereinigte, sondern auch trockene Luft dem Fahrzeuginnenraum zugeführt wird. Mit dem Desorptionsluftstrom wird in der Desorptionsphase auch die Feuchtigkeit aus dem Reaktor ausgetrieben.

Der Reaktor kann als Monolith oder Schüttung aus Adsorbermaterialien ausgeführt sein. Es ist jedoch auch möglich, auf einer Trägerstruktur das Adsorptionsmaterial in Form einer Beschichtung aufzubringen, wobei die Trägerstruktur ein Wärmeübertragerkunststoffschaum oder -gitter sein kann. Damit neben Schad- und Aromastoffen auch Viren und Mikroorganismen dem Luftstrom entzogen werden, sind zusätzlich zu den Adsorbermaterialien Flächen mit einer Kupferoxid- oder Edelmetallbeschichtung vorgesehen. Für den Fall einer hohen Kontamination des Adsorptionsmaterials ist es zur beschleunigten Regenerierung des Reaktors zweckmäßig, eine Einrichtung zur Spülung des Reaktors mittels Dampfstoß oder eines Spülgases vorzusehen.

Ausführungsbeispiele der Vorrichtung zur Beseitigung der Schad- und Aromastoffe sind nachstehend anhand der Zeichnungen näher erläutert. In der Zeichnung zeigt:
- Fig. 1: eine schematische Darstellung einer Luftreinigungsvorrichtung für ein Kraftfahrzeug,
- Fig. 2: die Vorrichtung gemäß Fig. 1 in einer zweiten Betriebsstellung,
- Fig. 3: eine Luftreinigungsvorrichtung mit separat zugeführtem Desorptionsluftstrom,
- Fig. 4: die Vorrichtung gemäß Fig. 3 in einer zweiten Betriebsstellung,
- Fig. 5: einen rotierenden Reaktor.

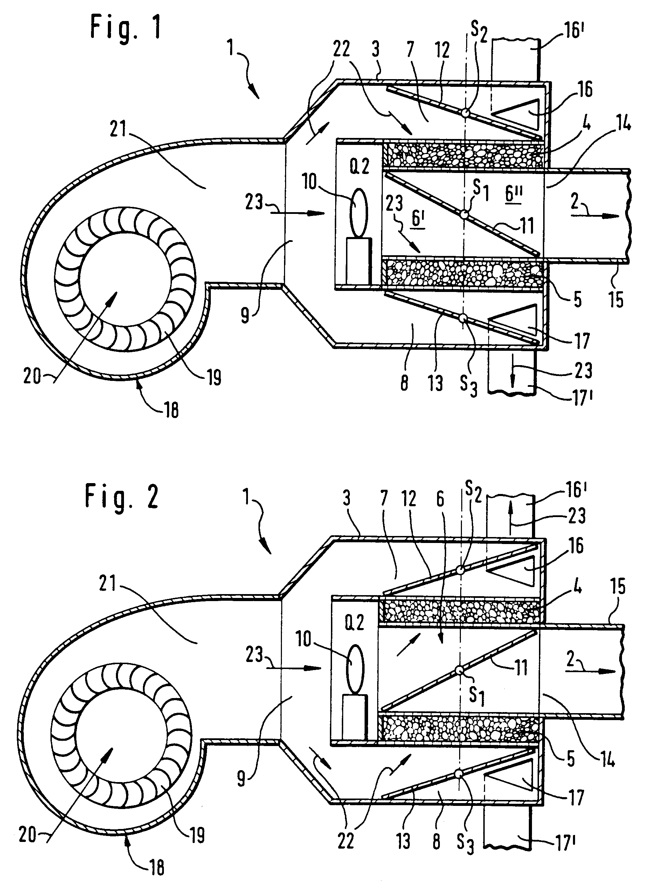

Die in den Fig. 1 und 2 gezeigte Vorrichtung 1 zur Reinigung eines dem Fahrzeuginnenraum zugeführten Luftstromes 2 umfaßt zwei in einem Gehäuse 3 angeordnete Reaktoren 4 und 5, die parallel zueinander angeordnet sind und zwischen denen eine gemeinsame Hauptluftkammer 6 gebildet ist. Die Reaktoren 4, 5 sind als flächige Wandelemente ausgebildet und begrenzen mit der anderen Seite jeweils eine Nebenluftkammer 7 und 8, die sich parallel zur Längsrichtung der Reaktoren erstrecken. Jeder Reaktor 4, 5 bildet eine luftdurchlässige Wand zwischen den Nebenluftkammern 7, 8 und der Hauptluftkammer 6. Die Hauptluftkammer 6 und die Nebenluftkammern 7, 8 sind an ihren einer Lufteintrittskammer 9 zugewandten Enden offen, wobei eingangsseitig der Hauptluftkammer 6 eine Heizvorrichtung 10 zur Erwärmung des in die Hauptluftkammer eintretenden Luftstromes vorgesehen ist.

In jeder Nebenluftkammer 7, 8 und der Hauptluftkammer 6 ist ein als Klappe ausgeführtes Luftstromsteuerelement 11, 12, 13 angeordnet, das sich diagonal in der jeweiligen Kammer 6, 7, 8 erstreckt und um eine Schwenkachse S₁, S₂, S₃ in der Klappenmitte schwenkbar ist, so daß die Luftstromsteuerelemente zwischen den durch die Diagonalen der Luftkammern 6, 7, 8 bestimmten Endlagen umschaltbar sind. Alle Luftstromsteuerelemente 11, 12, 13 werden gleichzeitig betätigt, vorzugsweise von einem gemeinsamen Antrieb. Die Luftstromsteuerklappe 11 in der Hauptluftkammer 6 teilt diese in jeder der beiden möglichen Stellungen in einen vorderen Bereich 6' und einen hinteren Bereich 6''. An einer Öffnung 14 im Bereich 6'' der Hauptluftkammer 6 ist ein zu dem in der Zeichnung nicht gezeigten Fahrzeuginnenraum führender Luftkanal 15 angeschlossen.

In den Nebenluftkammern 7 und 8 sind Fortluftöffnungen 16, 17 vorgesehen, die sich an den der Lufteintrittskammer entfernt liegenden Enden befinden und an die Fortluftkanäle 16', 17' angeschlossen sind. Die Fortluftöffnungen 16, 17 sind je nach Stellung der Luftstromsteuerelemente 12 und 13 schließbar, wobei stets eine der Fortluftöffnungen geschlossen und die andere geöffnet ist.

An dem Gehäuse 3 ist vor der Lufteintrittskammer 9 ein Gebläse 18 mit einem Radiallaufrad 19 angeordnet, das Luft gemäß Pfeil 20 ansaugt - dies kann beispielsweise aus dem Fahrzeuginnenraum abgeführte Luft sein - und einen Luftstrom durch einen Diffusor 21 in die Lufteintrittskammer 9 erzeugt. Dieser Luftstrom wird in einen Adsorptionsluftstrom 22 und einen Desorptionsluftstrom 23, der zunächst die Heizvorrichtung 10 durchströmt, aufgeteilt. Der Adsorptionsluftstrom 22 wird gemäß Fig. 1 aufgrund der Stellung der Luftstromsteuerelemente 11, 12 und 13 durch den Reaktor 4 geführt und dort gereinigt, wobei diese Reinigung eine Adsorption und/oder Absorption von Schad- und Aromastoffen ist. Aus dem Reaktor 4 tritt der Adsorptionsluftstrom in den Bereich 6'' der Hauptluftkammer 6 und verläßt letztere durch die Öffnung 14 und den Luftkanal 15 als gereinigter Luftstrom 2, der dem Fahrzeuginnenraum zugeführt wird.

Der Desorptionsluftstrom 23 tritt aus der Heizvorrichtung 10 kommend in den Bereich 6' der Hauptluftkammer 6 ein und wird aufgrund der Stellung des Luftstromsteuerelementes 11 durch den Reaktor 5 geführt und nimmt dort die an der Oberfläche des Adsorbermaterials eingelagerten Schad- und Geruchsstoffe auf. Der den Reaktor 5 verlassende Desorptionsluftstrom tritt durch die in der Nebenluftkammer 8 befindliche Fortluftöffnung 17 aus und wird an die Umgebungsluft abgegeben. Werden die Luftstromsteuerelemente 11, 12 und 13 in die zweite mögliche Stellung gebracht, wie dies in Fig. 2 dargestellt ist, so dient der Reaktor 5 aufgrund der Stellung der Luftstromsteuerelemente 11, 12 und 13 zur Reinigung des Adsorptionsluftstromes 22, der von der Nebenluftkammer 8 in den Bereich 6'' der Hauptluftkammer 6 gelangt und von dort als gereinigter Luftstrom 2 dem Fahrzeuginnenraum zugeführt wird. Gleichzeitig wird der Desorptionsluftstrom 23 durch den Reaktor 4 in die Nebenluftkammer 7 geleitet und tritt durch die Fortluftöffnung 16 und den Fortluftkanal 16' aus.

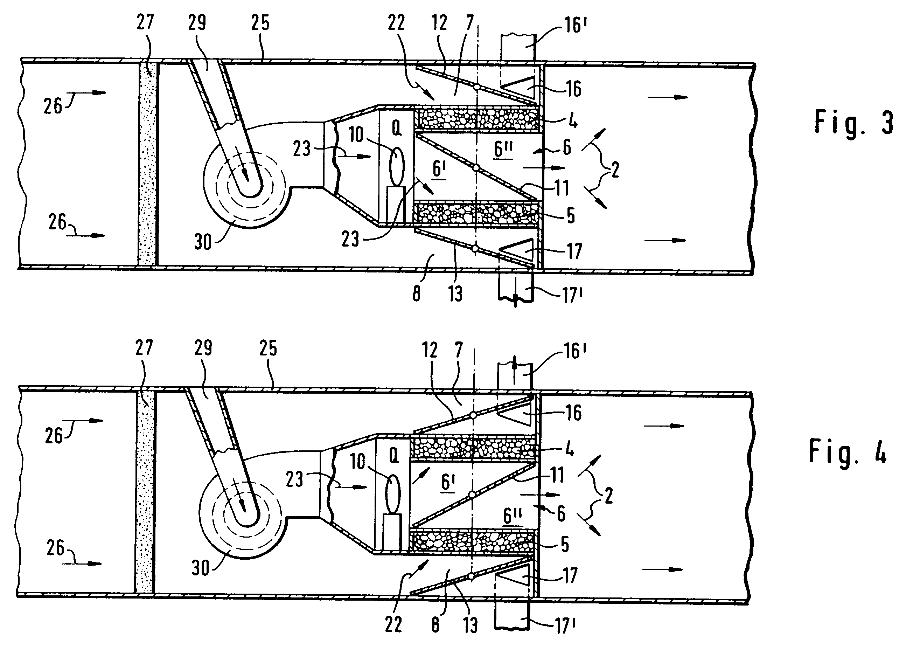

Die in den Fig. 3 und 4 gezeigte Vorrichtung unterscheidet sich von der zuvor beschriebenen dadurch, daß die Nebenluftkammern 7 und 8 nicht an die Lufteintrittskammer 9 angeschlossen sind, sondern von einem getrennten Luftstrom beaufschlagt werden. Die Gesamtanordnung befindet sich in einem Luftführungskanal 25, dem aus dem Fahrzeuginnenraum abgeführte Luft gemäß Pfeilen 26 zugeführt wird. Zur Entfernung grober Verunreinigungen im Luftstrom ist ein Partikelfilter 27 vorgesehen, so daß der Adsorptionsluftstrom den jeweils zugeschalteten Reaktor 4 oder 5 nicht mit Schmutz belastet. Ein mit der Außenseite des Fahrzeugs verbundener Luftkanal 29 führt zum Ansaugbereich eines Gebläses 30, das ausschließlich zur Erzeugung des Desorptionsluftstromes 23 dient. Es ist auch möglich, ein Partikelfilter im Luftkanal 29 anzuordnen, so daß auch der in der Außenluft befindliche Schmutz nicht den Reaktor belastet. Im übrigen ist die Funktion der Vorrichtung gleich derjenigen, wie sie zu den Fig. 1 und 2 beschrieben wurde, so daß auf die diesbezüglichen Angaben verwiesen wird.

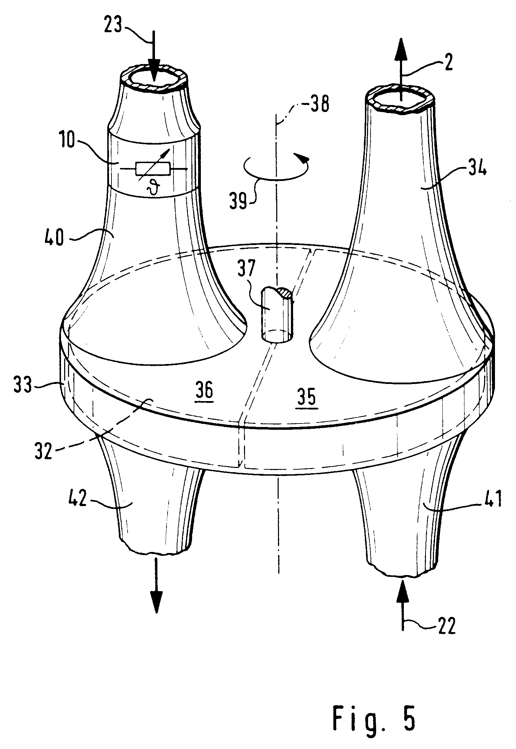

In Fig. 5 ist ein rotierender Reaktor 32 dargestellt, der anstelle der in Fig. 3 und 4 dargestellten ruhenden Reaktoren 4 und 5 benutzt werden kann. Der Reaktor 32, der die Form einer Scheibe aufweist, befindet sich in einem Gehäuse 33, das in eine Kammer 35 für den Adsorptionsluftstrom und in eine Kammer 36 für den Desorptionsluftstrom unterteilt ist. In jeder Kammer 35 und 36 bildet der Reaktor ein sich quer zur Luftströmungsrichtung erstreckendes und luftdurchlässiges, flächiges Wandelement. Der Reaktor besitzt eine Antriebswelle 37, mittels der der Reaktor um die Drehachse 38 im Sinne des Pfeils 39 bewegt wird. Durch einen Anschlußstutzen 41 tritt der Adsorptionsluftstrom 22 in die Kammer ein und wird durch den in dieser Kammer befindlichen Reaktorabschnitt gereinigt, um dann durch einen Luftführungskanal 34 als gereinigter Luftstrom 2 dem Fahrzeuginnenraum zugeführt zu werden. Der Desorptionsluftstrom 23 wird zunächst durch die Heizvorrichtung 10 geleitet und dann durch einen Anschlußstutzen 40 der Kammer 36 für den Desorptionsluftstrom zugeführt. Aus dem in dieser Kammer 36 befindlichen Reaktorabschnitt werden die in dem Adsorptionsmaterial eingelagerten Schadstoffe aufgenommen und durch einen Fortluftkanal 42 ins Freie geleitet.

Die zuvor beschriebenen Vorrichtungen können je nach Art des Adsorbermaterials unterschiedliche Schad- und Aromastoffe aufnehmen, wobei die Mischung oder Kombination verschiedener Materialien das Spektrum der eliminierten Stoffarten wesentlich vergrößert. Als Beispiele für die zu beseitigenden Stoffe sind insbesondere Kohlenwasserstoffe wie Äther und Benzole zu nennen und ebenso Alkohole, Schwefelwasserstoffe, Amine, Ammoniak, Nikotin, Carbonsäure, Halogenide und Methylenchlorid. Besonders hervorzuheben ist außerdem, daß durch die Vorrichtung auch alle Abgasbestandteile, die die Fahrzeuge an die Luft abgeben, ausgefiltert werden und ebenso deren Reaktionsprodukte, von denen insbesondere Ozon zu nennen ist. Die Reinigung der dem Fahrzeuginnenraum zugeführten Luft stellt einen für das Wohlbefinden der Fahrzeuginsassen wichtigen Beitrag dar und erhöht außerdem die Verkehrssicherheit, da aufgrund des Entzugs der Feuchtigkeit aus dem Adsorptionsluftstrom dem Fahrzeuginnenraum trockene Luft zugeführt und dadurch ein Beschlagen der Scheiben vermieden wird.

## Patentansprüche

1. Vorrichtung zur Beseitigung der Schad- und Aromastoffe aus einem dem Fahrzeuginnenraum zugeführten Luftstrom (2) mit einem Luftführungsgehäuse (3, 25, 33), in dem mindestens ein die Schad- und Aromastoffe adsorbierender Reaktor angeordnet ist,
dadurch gekennzeichnet, daß in dem Luftführungsgehäuse (3, 25, 33) zwei voneinander getrennte parallele Luftströmungswege gebildet sind und in jedem der Luftströmungswege ein als flächige Wand ausgebildeter Reaktor (4, 5, 32) mit einem Adsorbens vorgesehen ist und das Adsorbens in einem Luftströmungsweg von einem Adsorptionsluftstrom (22) und das Adsorbens in dem anderen Luftströmungsweg von einem Desorptionsluftstrom (23) beaufschlagt ist, wobei die Luftströmungsrichtung in den Reaktoren im Adsorptionsbetrieb und im Desorptionsbetrieb gegensinnig ist.

2. Vorrichtung nach Anspruch 1,
dadurch gekennzeichnet, daß die Luftströmungswege durch eine gemeinsame Hauptluftkammer (6) und zwei getrennte Nebenluftkammern (7, 8) gebildet sind und jeder der Reaktoren (4, 5) zwischen der Hauptluftkammer (6) und einer der Nebenluftkammern (7 oder 8) angeordnet ist und daß Luftstromsteuerelemente (11, 12, 13) in der Hauptluftkammer (6) und den Nebenluftkammern (7, 8) vorgesehen sind, durch die wechselseitig die Reaktoren (4, 5) vom Adsorptionsbetrieb zum Desorptionsbetrieb und umgekehrt umsteuerbar sind, wobei der im Adsorptionsbetrieb befindliche Reaktor (4 bzw. 5) abströmseitig mit dem Fahrzeuginnenraum und der im Desorptionsbetrieb befindliche Reaktor (5 bzw. 4) abströmseitig mit der Außenseite des Fahrzeugs verbunden sind.

3. Vorrichtung nach Anspruch 1,
dadurch gekennzeichnet, daß ein Gehäuse (33) mit einem rotierenden Reaktor (32) vorgesehen ist, durch das die Luftströmungswege in Kammern (35, 36) des Gehäuses (33) geführt sind, wobei Sektoren des Reaktors (32) aus der Kammer (35) des Adsorptionsluftstromes in die Kammer (36) des Desorptionsluftstromes bewegt werden und umgekehrt.

4. Vorrichtung nach Anspruch 3,
dadurch gekennzeichnet, daß die Drehung des Reaktors (32) schrittweise nach vorgegebenen Zeitzyklen erfolgt.

5. Vorrichtung nach Anspruch 3,
dadurchgekennzeichnet, daß der Reaktor (32) kontinuierlich gedreht wird.

6. Vorrichtung nach einem der Ansprüche 2 oder 3,
dadurch gekennzeichnet, daß zur Desorption des Adsorbens vor dem Reaktor (4, 5, 32) eine Heizvorrichtung (10), insbesondere eine PTC-Heizung oder ein wasserdurchströmter Heizkörper, angeordnet ist.

7. Vorrichtung nach Anspruch 2,
dadurch gekennzeichnet, daß ein Gebläse (18) vorgesehen ist, das saugseitig mit einem Abluftkanal des Fahrzeuginnenraumes und druckseitig mit der Hauptluftkammer (6) und der jeweils den Adsorptionsluftstrom (22) führenden Nebenluftkammer (7 bzw. 8) verbunden ist.

8. Vorrichtung nach einem der Ansprüche 2 bis 6,
dadurch gekennzeichnet, daß ein Gebläse (30) vorgesehen ist, das saugseitig mit der Außenseite des Fahrzeugs und druckseitig ausschließlich mit der Hauptluftkammer (6) oder der Kammer (36) des Desorptionsluftstromes (23) verbunden ist.

9. Vorrichtung nach einem der vorhergehenden Ansprüche,
dadurch gekennzeichnet, daß mindestens ein Partikelfilter (27) für den Adsorptions- und/oder Desorptionsluftstrom vorgesehen ist.

10. Vorrichtung nach einem der vorhergehenden Ansprüche,
dadurch gekennzeichnet, daß der Reaktor aus mindestens einem der folgenden Adsorbermaterialien besteht: Aktivkohle, Zeolith, Aluminiumoxid, Silicagel.

11. Vorrichtung nach Anspruch 10,
dadurch gekennzeichnet, daß der Reaktor (4, 5, 32) aus einer Kombination oder Mischung von mindestens zwei der Materialien besteht.

12. Vorrichtung nach Anspruch 11,
dadurch gekennzeichnet, daß bei einer Kombination die verschiedenen Materialien in quer zur Luftströmungsrichtung verlaufenden Schichten angeordnet sind.

13. Vorrichtung nach einem der Ansprüche 10 bis 12,
dadurch gekennzeichnet, daß der Reaktor als Monolith oder Schüttung aus Adsorbermaterialien ausgeführt ist.

14. Vorrichtung nach einem der Ansprüche 10 bis 12,
dadurch gekennzeichnet, daß der Reaktor als mit Adsorbermaterialbeschichtung auf einem Wärmeübertrager, Kunststoffschaum oder Gitter ausgeführt ist.

15. Vorrichtung nach einem der Ansprüche 10 bis 14,
dadurch gekennzeichnet, daß zusätzlich zu den Adsorbermaterialien Flächen mit einer Kupferoxid- oder Edelmetallbeschichtung vorgesehen sind.

16. Vorrichtung nach einem der vorhergehenden Ansprüche,
dadurch gekennzeichnet, daß eine Einrichtung zur Spülung des Reaktors mittels Dampfstoß oder eines Spülgases vorgesehen ist.

## Claims

1. Device for removing noxious and aromatic substances from an air flow (2) fed into the interior of a vehicle, comprising an air feed housing (3, 25, 33) in which at least one reactor is disposed which adsorbs the noxious and aromatic substances,
characterised in that two separate, parallel air flow paths are formed in the air feed housing (3, 25, 33) and a reactor (4, 5, 32) containing an adsorbent designed as a flat wall is provided in each of the air flow paths and the adsorbent in one air flow path is exposed to an adsorption air flow (22) and the adsorbent in the other air flow path is exposed to a desorption air flow (23), the direction of air flow in the reactors being opposite during adsorption operation and during desorption operation.

2. A device as claimed in claim 1,
characterised in that the air flow paths are formed by a common main air chamber (6) and two separate subsidiary air chambers (7, 8) and each of the reactors (4, 5) is disposed between the main air chamber (6) and one of the subsidiary air chambers (7 or 8) and in that air-flow control elements (11, 12, 13) are provided in the main air chamber (6) and the subsidiary air chambers (7, 8), by means of which the reactors (4, 5) can be alternately switched over from adsorption operation to desorption operation and vice versa, the reactor (4 or 5) which is in adsorption operation being connected to the vehicle interior on the downstream side and the reactor (5 or 4) which is in desorption operation being connected on the downstream side to the outside of the vehicle.

3. A device as claimed in claim 1,
characterised in that a housing (33) with a rotating reactor (32) is provided, through which the air flow paths are fed into chambers (35, 36) of the housing (33), sectors of the reactor (32) being moved from the adsorption air flow chamber (35) into the desorption air flow chamber (36) and vice versa.

4. A device as claimed in claim 3,
characterised in that the reactor (32) is rotated in steps in accordance with predetermined time cycles.

5. A device as claimed in claim 3,
characterised in that the reactor (32) is rotated continuously.

6. A device as claimed in one of claims 2 or 3,
characterised in that to desorb the adsorbent, a heating device (10) in particular a PTC heater or a radiator with water flowing through it, is disposed upstream of the reactor (4, 5, 32).

7. A device as claimed in claim 2,
characterised in that a fan (18) is provided which is connected on the intake side to an exhaust-air duct of the vehicle interior and on the pressure side to the main air chamber (6) and to the respective subsidiary air chamber (7 or 8) through which the adsorption air flow (22) is being fed.

8. A device as claimed in one of claims 2 to 6,
characterised in that a fan (30) is provided, which is connected on the intake side with the outside of the vehicle and on the pressure side only to the main air chamber (6) or the chamber (36) of the desorption air flow (23).

9. A device as claimed in one of the preceding claims,
characterised in that at least one particle filter (27) is provided for the adsorption and/or desorption air flow.

10. A device as claimed in one of the preceding claims,
characterised in that the reactor is composed of at least one of the following adsorber materials: active carbon, zeolite, aluminium oxide, silica gel.

11. A device as claimed in claim 10,
characterised in that the reactor (4, 5, 32) is composed of a combination or mixture of at least two of the materials.

12. A device as claimed in claim 11,
characterised in that, in the case of a combination, the different materials are disposed in layers extending transversely to the direction of air flow.

13. A device as claimed in one of claims 10 to 12,
characterised in that the reactor is designed as a monolith or bed of adsorber materials.

14. A device as claimed in one of claims 10 to 12,
characterised in that the reactor is provided as a coating of adsorber material on a heat-transfer medium, plastic foam or lattice.

15. A device as claimed in one of claims 10 to 14,
characterised in that in addition to the adsorber materials, areas are provided which have a copper oxide or noble-metal coating.

16. A device as claimed in one of the preceding
claims, characterised in that a device is provided for flushing the reactor by means of steam shock or a flushing gas.

## Revendications

1. Dispositif d'élimination des substances nocives et odorantes d'un flux d'air (2) dirigé dans l'habitacle d'un véhicule, comprenant une enveloppe d'amenée d'air (3, 25, 33) dans laquelle au moins un réacteur qui adsorbe les substances nocives et odorantes est disposé,
caractérisé en ce que deux voies parallèles et séparées de circulation d'air sont formées dans l'enveloppe d'amenée d'air (3, 25, 33) et un réacteur (4, 5, 32) conformé en paroi plane et contenant un agent d'adsorption est prévu dans chacune des voies de circulation d'air et l'agent d'adsorption est balayé dans l'une des voies de circulation d'air par un flux d'air d'adsorption (22) et l'agent d'adsorption se trouvant dans l'autre voie de circulation d'air est balayé par un flux d'air de désorption (23), les sens de la circulation d'air étant opposés dans les réacteurs en régime d'adsorption et en régime de désorption.

2. Dispositif selon la revendication 1,
caractérisé en ce que les voies de circulation d'air sont formées d'une chambre principale commune à air (6) et de deux chambres secondaires séparées à air (7, 8) et chacun des réacteurs (4, 5) est disposé entre la chambre principale à air (6) et une chambre secondaire à air (7 ou 8) et en ce que des éléments (11, 12, 13) de commande des flux d'air qui sont prévus dans la chambre principale à air (6) et dans les chambres secondaires à air (7, 8) peuvent faire passer en alternance les réacteurs (4, 5) du régime d'adsorption en régime de désorption et inversement, le réacteur (4 ou 5) se trouvant en régime d'adsorption étant raccordé sur le côté d'évacuation à l'habitacle du véhicule et le réacteur (5 ou 4) se trouvent en régime de désorption étant raccordé sur le côté d'évacuation à l'extérieur du véhicule.

3. Dispositif selon la revendication 1,
caractérisé en ce qu'une enveloppe (33) avec un réacteur rotatif (32) à travers lequel les voies de circulation d'air sont guidées dans des chambres (35, 36) de l'enveloppe (33) est prévue, des secteurs du réacteur (32) pouvant être déplacés de la chambre (35) du flux d'air d'adsorption dans la chambre (36) du flux de désorption et inversement.

4. Dispositif selon la revendication 3,
caractérisé en ce que la rotation du réacteur (32) s'effectue pas à pas suivant des cycles prescrits de temps.

5. Dispositif selon la revendication 3,
caractérisé en ce que le réacteur (32) est entraîné en continu en rotation.

6. Dispositif selon l'une des revendications 2 ou 3,
caractérisé en ce qu'un dispositif de chauffage (10), en particulier un chauffage à résistance à coefficient positif de température ou un corps de chauffe dans lequel circule de l'eau, est disposé devant le réacteur (4, 5, 32) pour la désorption de l'agent d'adsorption.

7. Dispositif selon la revendication 2,
caractérisé en ce qu'une soufflante (18) est prévue, qui est raccordée sur le côté aspiration à un canal d'évacuation d'air de l'habitacle du véhicule et sur le côté refoulement à la chambre principale à air (6) et à la chambre secondaire à air (7 ou 8) dans laquelle passe respectivement le flux d'air d'adsorption (22).

8. Dispositif selon l'une des revendications 2 à 6
caractérisé en ce qu'une soufflante (30) est prévue, qui est raccordée sur le côté aspiration à l'extérieur du véhicule et sur le côté refoulement exclusivement à la chambre principale à air (6) ou à la chambre (36) du flux d'air de désorption (23).

9. Dispositif selon l'une des revendications précédentes,
caractérisé en ce qu'au moins un filtre à particules (27) est prévu pour le flux d'air d'adsorption et/ou le flux d'air de désorption.

10. Dispositif selon l'une des revendications précédentes,
caractérisé en ce que le réacteur consiste en au moins l'une des matières suivantes d'adsorption : charbon actif, zéolite, alumine, gel de silice.

11. Dispositif selon la revendication 10,
caractérisé en ce que le réacteur (4, 5, 32) consiste en une combinaison ou en un mélange d'au moins deux des matières.

12. Dispositif selon la revendication 11,
caractérisé en ce qu'en cas d'une combinaison, les différentes matières sont disposées en couches perpendiculaires à la direction de la circulation de l'air.

13. Dispositif selon l'une des revendications 10 à 12,
caractérisé en ce que le réacteur est conformé en monolithe ou en un amas de matières d'adsorption.

14. Dispositif selon l'une des revendications 10 à 12,
caractérisé en ce que le réacteur est réalisé sous la forme d'un revêtement de matière d'adsorption déposé sur un caloporteur, une matière plastique alvéolaire ou une grille.

15. Dispositif selon l'une des revendications 10 à 14,
caractérisé en ce qu'en plus des matières d'adsorption, des surfaces portant un revêtement d'oxyde de cuivre ou de métal précieux sont prévues.

16. Dispositif selon l'une des revendications précédentes,
caractérisé en ce qu'un dispositif de rinçage du réacteur par un choc de vapeur d'eau ou par un gaz de balayage est prévu.
